Europäisches Patentamt

European Patent Office

Office européen des brevets

(11) Publication number: 0 648 036 A1

## EUROPEAN PATENT APPLICATION

(21) Application number: 94113282.1

(22) Date of filing: 25.08.94

(51) Int. Cl.⁶: H04L 25/03

(30) Priority: 08.10.93 ES 9302130

(43) Date of publication of application:
12.04.95 Bulletin 95/15

(84) Designated Contracting States:
DE FR GB IT SE

(71) Applicant: ALCATEL STANDARD ELECTRICA, S.A.
Ramirez de Prado, 5/6
E-28045 Madrid (ES)

(72) Inventor: Del Pino Juarez, Antonio
José del Rio 26, 2. D
E-28019 Madrid (ES)

Inventor: Garcia Pedraja, Fidel
Paseo de Recoletos 11, 3.
E-28004 Madrid (ES)
Inventor: Artes Rodriguez, Antonio, Escuela Superior de
Ingenieros de Telecomun. Edificio C,
Despacho 309
E-28040 Madrid (ES)

(74) Representative: Pohl, Herbert, Dipl.-Ing et al
Alcatel SEL AG
Patent- und Lizenzwesen
Postfach 30 09 29
D-70449 Stuttgart (DE)

(54) Burst receiver with differential demodulation.

(57) Of special application in digital radiocommunications systems with time division multiple access.

A bandpass input signal (S) is received which is split into two identical branches by a divider (1) in order to obtain, by frequency conversion means (2), two low pass signals, one in-phase and one in quadrature (Is,Qs), which are applied to adaptive filtering means (3) that equalise the communications channel, presenting an equalised signal (Rc) at its output which is finally demodulated in differential demodulation means (4) the output of which (Rd) is sent to decision means (5) that generate the output data signal (D).

This output data signal (D), the demodulated signal (Rd) and the equalized signal delayed by one symbol period (Rt), are used by the adaptive filtering means (3) in order to update the coefficients used in the adaptive filtering.

FIG. 2

## OBJECT OF THE INVENTION

This invention concerns a digital radio receiver that receives a bandpass signal with phase modulation and which, without recovering the carrier, regenerates the transmitted data by means of baseband differential demodulation from the in-phase and quadrature components previously equalised to compensate for linear distorsion produced in the communications channel.

It is of special application in burst transmission systems with multipropagation that require channel equalisation and in which the system efficiency is of vital importance, this efficiency being understood as the ratio between the useful information bits and the total bits sent.

## BACKGROUND TO THE INVENTION

In communications systems with multipropagation, such as the case of point to multipoint systems, the antenna of the central station is usually of the omnidirectional type since the terminal equipments can be distributed over a determined area whereby, although these terminal equipments have directional antennas, the received signal, both at the central station and by the terminal equipments, is usually subject to selective fading which notably deteriorates the quality of the received signal.

In order to overcome this impairment and assure the quality of the communications, equalizing circuits are employed that have a variable transfer function that depends on internal parameters, and the purpose of which is to compensate for the linear distorsion of the communications channel over which the signal is transmitted, so that this signal does not suffer channel impairment.

Nevertheless, for these systems to work correctly in baseband, it is necessary to recover the carrier which requires a certain time and this is usually incompatible with burst transmission systems, which try to minimise the part with non-useful information and thereby boost the efficiency of the system.

On the other hand, in the compromise between quality and efficiency, differential demodulators are used. The block diagram of a baseband differential demodulator can be seen in the article "Implementation of Coded Modems" by Shuzo Kato et al., IEEE COMMUNICATIONS MAGAZINE, December 1991, pages 88 to 97.

In this type of demodulator it is not necessary to recover the carrier, for which reason it concerns an extremely fast demodulator in which the output data can start to appear with a delay of only one bit.

The frequency error in the local oscillators must, in any case, be limited to a value that makes the extra phase shift produced in a bit period, as a consequence of this error, insignificant when compared with the phase shift caused by the modulation.

Under the previous condition, the demodulated data are obtained without any need for long headers for recovery of the carrier, which would considerably reduce the efficiency of the burst communications system.

Nevertheless, in a multipropagation environment, the degradation of the received signal due to selective fading is a serious handicap in burst transmission systems, difficult to overcome, that always leads to compromises between efficiency, complexity and quality.

## TECHNICAL PROBLEM TO BE OVERCOME

Consequently the technical problem to be overcome lies in how to use the channel compensation due to selective fading when working with demodulation systems without carrier recovery and, consequently, without being able to apply the equalization algorithms already known.

## CHARACTERISATION OF THE INVENTION

The burst receiver of the invention, receives a bandpass input signal that is divided into two other signals by means of a divider in order to feed frequency conversion means that produce at its output two lowpass signals, one in-phase and one in quadrature, which are sent to decision means for comparison of the previous values with reference values and to produce an output data signal with adequate shape and levels.

This receiver is characterised in that between the frequency conversion means and the differential demodulation means, adaptive filtering means are connected to perform a pre-filtering of the in-phase and quadrature lowpass signals in order to compensate for the linear distorsion of the communications channel.

The receiver according to the invention is characterised in that the aforementioned adaptive filtering means receive the output data signal, the demodulated signal and a signal that is its own output signal but delayed by one symbol period. All the preceding signals are used by the adaptive filtering means mentioned in order to update its filtering coefficients.

Finally, the receiver of the invention is characterised in that the relationship between the filtering coefficients for two consecutive sampling instants is the following:

$$\overline{W}_{(K+1)} = \overline{W}_{(K)} + \mu \, [e_{(K)} \cdot Rt \cdot \overline{R}^*_{(K)} + e^*_{(K)} \cdot Rc \cdot \overline{R}^*_{(K-1)}], \text{ where:}$$

- $\overline{W}_{(K+1)}$ is the filtering coefficients vector at the instant $K+1$,
- $\overline{W}_{(K)}$ is the filtering coefficients vector at the instant K,
- $\mu$ is a constant of proportionality,
- $e_{(K)}$ is an error signal at the instant K determined by the difference between the output data signal and the demodulated signal,
- $e^{*}_{(K)}$ is the conjugate of $e_{(K)}$,
- Rt is the output signal from the adaptive filtering means delayed by one symbol period, that is, at the instant K-1,
- Rc is the output signal from the adaptive filtering means at the instant K,
- $\overline{R}^{*}_{(K)}$ is the conjugate signal of the sample vector of the signal that is passing through the adaptive filtering means at the instant K, and
- $\overline{R}^{*}_{(K-1)}$ is the conjugate signal of the sample vector that was passing through the adaptive filtering means at the instant K-1.

With the application of the receiver according to the invention, it is possible to perform a channel equalisation process to compensate for the linear distorsion produced as a consequence of selective fading, all this together with differential demodulation that does not require carrier recovery, whereby offering a strategic advantage for high efficiency, burst transmission systems.

## BRIEF FOOTNOTES TO THE FIGURES

A fuller explanation of the invention is given in the following description based on the figures attached in which:

- figure 1 shows a block diagram of a receiver with differential demodulation in baseband, and
- figure 2 shows the block diagram of a receiver with differential demodulation and channel equalisation in baseband, according to the invention.

## DESCRIPTION OF THE INVENTION

As has already been stated, the differential demodulation does not require carrier recovery and is applicable to phase modulation systems, in which the phase difference in a symbol period indicates the symbol transmitted.

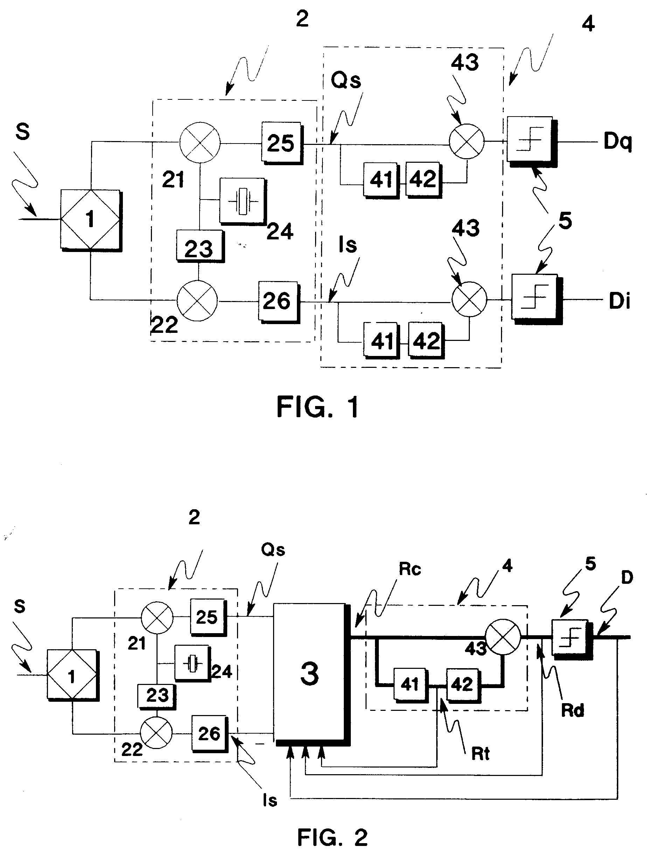

This procedure can be done at an intermediate frequency but it is also possible to do it in baseband starting from a complex envelope, that is, from the equivalent in-phase and quadrature signals, as is shown in figure 1.

In this case, the input signal S is split, by means of a divider 1, into two equal signals that are applied to frequency conversion means 2, the composition of which is already known according to the state of the art, and which consists of a free-running oscillator 24 at the same frequency as the carrier of the input signal S, a 90° phase-shifter circuit 23 in order to change the phase of the signal coming from the free-running oscillator 24, and two multipliers 21 and 22 that multiply the two samples of the input signal S by a signal coming from the free-running oscillator 24 and by a version of this last signal shifted in phase by 90° in a phase-shifter circuit 23.

The output signals from both multipliers are filtered in respective low-pass filters 25 and 26 in order to obtain the in-phase and quadrature low-pass signals, Is and Qs, that correspond to the complex envelope of the input signal S with a slight frequency error determined by the frequency difference between the carrier of the input signal S and that produced by the free-running oscillator 24.

Next, according to the state of the art, the aforementioned in-phase and quadrature low-pass signals Is and Qs are applied to differential demodulation means 4 for demodulation, the outputs of which, in turn, are applied to decision means that produce the output data signals Di and Dq, corresponding, respectively, to the in-phase and quadrature paths.

According to the invention, as can be seen in figure 2, both in-phase and quadrature low-pass signals, Is and Qs, are applied to adaptive filtering means 3 which comprise, as is known from many technical publications, a transversal filter whose coefficients form a complex vector, termed W, which vary according to quadratic error minimising criteria.

The output signal from the adaptive filtering means Rc is applied to differential demodulation means 4, of known configuration, formed by multiplier circuits 43 that multiply the output signal from the adaptive filtering means Rc by a version of this signal but delayed by one symbol period in a delay circuit 41 and shifted in phase by 90° in a circuit 42 that forms the conjugate.

The output signal generated by said differential demodulation means 4 is the demodulated signal Rd that is sent to decision means 5 in order to produce the output data signal D.

The adaptive filtering means 3 consist of a transversal filter, as stated above, with a certain number of stages, so that there is also a complex vector, to be termed $\overline{R}$, the components of which are the values of the compound incoming signal formed by the two in-phase and quadrature low-pass signals, Is and Qs, for each of the sampling stages of the transversal filter.

In this way the updating of the coefficients vector of the transversal filter $\overline{W}$ for the next sam-

pling instant, hereafter $\overline{W}_{(K+1)}$, is obtained from the following expression:

$$\overline{W}_{(K+1)} = \overline{W}_{(K)} + \mu\ [e_{(K)}.\ Rt.\ \overline{R}^*_{(K)} + e^*_{(K)}.\ Rc.\ \overline{R}^*_{(K-1)}].$$

In the above expression:
- the variable in brackets K, K-1 and K+1 indicates, respectively, a given instant of time, the preceding instant and the following instant,
- $\mu$ is a constant that affects the rate of convergence of the filter and the required error level, for which reason its value is always a compromise between the two parameters,
- $e_{(K)}$ is an error signal resulting from the difference between the output data signal D and the demodulated signal Rd, and
- Rt is the output signal from the adaptive filtering means delayed by one symbol period and that is used in both the differential demodulation means 4 and in the updating formula of the filtering coefficients employed by the adaptive filtering means 3.

The rest of the parameters are already known from the description itself and the terms used in the formula conform to the technical literature relating to equalisers, for example of the LMS type.

## Claims

1. **BURST RECEIVER WITH DIFFERENTIAL DEMODULATION** which receives a bandpass input signal (S) that is split into two equal signals by means of a divider (1), these being applied to frequency conversion means (2) that produce two in-phase and quadrature low-pass signals (Is,Qs) which are respectively demodulated in differential demodulation means (4) generating the demodulated signal (Rd) that is sent to decision means (5) in order to regenerate the received data and produce an output data signal (D) with determined levels and **characterised** in that adaptive filtering means (3) are connected between the frequency conversion means (2) and the differential demodulation means (4), that filter the in-phase and quadrature low-pass signals (Is,Qs) in order to compensate for the linear distorsion of the communications channel over which the received signal has been transmitted.

2. **BURST RECEIVER** according to claim 1, **characterised** in that the adaptive filtering means (3) also receives the output data signal (D), the demodulated signal (Rd) and a signal coming from its own output and delayed by one symbol period (Rt), and in that these signals are used by the adaptive filtering means (3) to update its filtering coefficients.

3. **BURST RECEIVER** according to claim 2, **characterised** in that the filtering coefficients of the adaptive filtering means (3) are updated according to the following expression:

$$\overline{W}_{(K+1)} = \overline{W}_{(K)} + \mu\ [e_{(K)}.\ Rt.\ \overline{R}^*_{(K)} + e^*_{(K)}.\ Rc.\ \overline{R}^*_{(K-1)}],\ \text{where:}$$

- $\overline{W}_{(K+1)}$ is the filtering coefficients vector at the instant K+1,
- $\overline{W}_{(K)}$ is the filtering coefficients vector at the instant K,
- $\mu$ is a constant of proportionality,
- $e_{(K)}$ is an error signal at the instant K determined by the difference between the output data signal (D) and the demodulated signal (Rd),
- $e^*_{(K)}$ is the conjugate of $e_{(K)}$,
- Rt is the output signal from the adaptive filtering means (3) delayed by one symbol period, that is, at the instant K-1,
- Rc is the output signal from the adaptive filtering means (3) at the instant K,
- $\overline{R}^*_{(K)}$ is the conjugate signal of the sample vector of the signal that is passing through the adaptive filtering means (3) at the instant K,
- $\overline{R}^*_{(K-1)}$ is the conjugate signal of the sample vector that was passing through the adaptive filtering means (3) at the instant K-1.

4. **BURST RECEIVER** according to claim 1, **characterised** in that it can also be used for continuous transmission.

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | EP-A-0 376 250 (ALCATEL TRANSMISSION PAR FAISCEAUX HERTZIENS A.T.F.H.) | 1,4 | H04L25/03 |
| A | * column 1 - column 2 * | 2,3 | |
| | --- | | |
| X | EP-A-0 524 560 (GENERAL INSTRUMENT CORPORATION) * abstract; figure 1 * | 1,4 | |
| | ----- | | |

TECHNICAL FIELDS SEARCHED     (Int.CL.6)

H04L

The present search report has been drawn up for all claims

| Place of search | Date of completion of the search | Examiner |
|---|---|---|
| THE HAGUE | 11 January 1995 | Peeters, M |